# EUROPEAN PATENT APPLICATION

(11) **EP 4 434 740 A1**
(43) Date of publication of application: **25.09.2024**
(21) Application number: 24165519.0
(22) Date of filing: 22.03.2024
(51) Int. Cl.: B32B 3/02, B32B 5/02, B32B 5/18, B32B 5/24, B32B 7/12, B32B 15/10, B32B 21/10, E04B 1/94, E04C 2/296

(54) **WALL PANEL FOR A MOBILE MEDICAL ACCOMMODATION UNIT, A MOBILE MEDICAL ACCOMMODATION UNIT AND A METHOD OF CONSTRUCTING A WALL PANEL FOR A MOBILE MEDICAL ACCOMMODATION UNIT**

(30) Priority: 22.03.2023 NL 2034402
(71) Applicant: Lamboo Medical Holding B.V., 2712 PR Zoetermeer (NL)
(72) Inventor: LAMBOO, Joost, 2712 PR Zoetermeer (NL)
(74) Representative: V.O.

(57) **Abstract**

Wall panel for a medical accommodation unit, comprising a number of sandwiched layers, the layers including:
- a pair of exterior layers that define opposed planar outer surfaces of the panel;
- a plurality of interior layers interposed between the exterior layers;

wherein the plurality of inner layers comprise:
- a structural layer that lends stiffness and strength to the panel;
- a thermal insulating layer comprising thermally insulating material;

wherein the exterior layer comprises a fire spreading material, and the plurality of interior layers includes a fire shielding layer comprising a fire resistant material.

## Description

The invention relates to a wall panel for a mobile medical accommodation unit, a mobile medical accommodation unit and a method of constructing a wall panel for a mobile medical accommodation unit.

Mobile medical accommodation units are generally known, and include medical accommodation units that are transportable under their own motion, e.g. trucks or busses, or with assistance of a vehicle, e.g. accommodation units that are provided with wheels so that can be towed behind a vehicle as a trailer, accommodation units that are provided with extendable and retractable legs that can be transported on a separate trailer, and accommodation units with a hoistable frame that can be hoisted onto a trailer using a crane. Mobile medical accommodation units are typically transported by road to be relocated, and preferably within the road regulations for normal or exceptional transport in terms of size and weight limitations.

Such mobile medical accommodation typically includes an examination room for the examination or treatment of patients, and the wall panels are typically used to construct upright outside and/or internal walls, and may also be used to construct flooring and roofing. Mobile medical accommodation is typically used to make complex and expensive examination apparatus, e.g. X-Ray, MRI or CT scanners available on a semi-temporary basis, e.g. as medical trailers that make X-Ray, MRI or CT scanners available in remote, sparsely populated areas for several hours, days or weeks, or (semi) portable cabins that make X-ray, MRI or CT scanners available during renovation of a hospital or to provide additional capacity for several weeks or months. An example of a wheeled mobile medical accommodation unit with an onboard scanning device for medical examination embodied as a trailer with wall panels can be found in applicant's EP 1437158 A1.

Due to the mobile and medical application of the device, there are relatively high demands on the design on the wall panel compared to other wall panels. In particular, there are widely varying design constraints to be met, e.g. to provide sufficient structural stiffness, wear resistance, thermal insulation, weatherproofing, electromagnetic shielding and radiation blocking/absorption, yet with minimal use of space and weight. To meet these criteria, it has been proposed in the above mentioned publication EP 1437158 A1 to manufacture the wall panel from sandwiched panel layers.

In addition, fire retardancy is an important aspect of a mobile medical accommodation unit. For example, when a fire starts inside the mobile medical accommodation unit, it is often required that there is sufficient time to evacuate persons safely from the accommodation unit and/or that there is have sufficient time to take measures to stop the fire from developing further and to put it out. As another example, when a fire starts outside the mobile medical accommodation unit, it is often required that there is sufficient time to evacuate persons safely from the accommodation unit. Especially when the accommodation unit is used for longer times or is placed near or connected to a building, it may be subject to relatively stringent fire regulations.

However, since the mobile medical apparatus needs to be transportable, for example via a trailer for normal road transport, there are weight and size limitations on the wall panels while still needing to meet fire regulations. More specifically, the wall panel cannot weigh too much, nor be too thick as this impacts the space available inside the unit for accommodation of people and medical equipment. As a result, the wall panel needs to be relatively light weight, thin, strong and be sufficiently fire retardant while still being suitable for use as wall panels for a mobile medical apparatus in terms of strength and wear resistance without being too expensive.

The invention aims to provide a wall panel for a mobile medical accommodation unit having improved fire resistance, preferably while retaining advantages of the known panel and preferably with minimal reduction of the functionality of the panel for a mobile medical accommodation unit.

Therefore, the invention provides for a wall panel for a medical accommodation unit, in particular the wall panel according to claim 1, comprising a number of sandwiched layers. The layers include a pair of exterior layers that define opposed planar outer surfaces of the panel, a plurality of interior layers interposed between the exterior layers. The plurality of inner layers comprise a structural layer that lends stiffness and strength to the panel, a thermal insulating layer comprising thermally insulating material. The exterior layer comprises a fire spreading material and the plurality of interior layers include a fire shielding layer comprising a fire resistant material.

Such a panel can improve the fire resistance by first spreading the fire along the outer surface of panel with the fire spreading material and then retarding or stopping the progress of the fire transverse to the outer surface of the panel by the fire shielding material. More specifically, the spreading layer allows the thermal energy to spread over a larger surface, thereby lowering the thermal energy per square meter. Since the thermal energy per square meter is lowered by the fire spreading material, the fire shielding layer is able to slow or prevent the penetration of thermal energy into the panel more efficiently. As a result, the panel is not compromised does not catch fire or collapse as fast as a conventional wall panel for medical accommodation units.

Within the context of this disclosure, fire resistant material is meant to be construed as a material that is resistant to fire, in particular a material that does not burn. The term planar is to be construed as a substantially flat plane. The term structural layer is to be construed as a layer that lends stiffness and strength to the panel, in particular to retain the planar shape in an upright, vertical, orientation, preferably also in a lying, horizontal, orientation under its own load.

The panel may include further layers. The further layers may include multiple layers of the same function. The function of a layer set out herein as 'structural', 'thermal insulating' and / or 'fire shielding' can be a main function of the layer. A particular layer may have further functions, e.g. a double main function or a secondary function besides the main function in the same single layer. Such further function may e.g. be providing rigidity or sound dampening.

The exterior layers as set out herein each define an outer surface of the panel, the thickness of the panel or layer being a dimension transverse to the outer surface. The exterior layer can have a protective finishing layer that provides weather proofing, protects against ingress of moisture, abrasion and / or that enhances hygiene, e.g. by being resistant to bacteria or being antibacterial.

One or both of the exterior layers can include or be substantially made of a plastics material, and in particular can include a sheet that includes or is substantially made of a plastics material, preferably polyester. Such a material can further help with the spread of thermal energy and can help with additional material properties, such as weatherproofing, prevention of ingress of water or corrosion resistance. If the material is a polyester, the layer can include a gelcoat, e.g. applied onto the sheet of polyester. The exterior layers each can extend over the full surface area of the panel. The exterior layer may also be provided with antibacterial material, e.g. an exterior layer that faces an enclosure of the accommodation unit.

Furthermore, one or both of the pair of exterior layers can comprise a fiber matrix. The fiber matrix can help retain integrity of the fire spreading layer, and can e.g. prevent blistering of plastics material when exposed to high temperatures and thermal energy, for example when exposed to flames of a fire. The fiber matrix can e.g. comprise fibers, e.g. interwoven glass fibers, and may be attached to or included in the sheet of plastics material. A suitable material for the external layer is e.g. LAMILUX ^{®} FireShield 630 Gewebe FR Gelcoat.

The fire shielding layer can extend over the full surface area of the wall panel. This may allow for the layer to also cover the edges of the panels, including a frame and/or the corner portions of the panel, thereby minimizing or removing any sections of the wall panel that do not have the fire resistant properties. If, for example, an edge portion of the wall panel would not have the fire shielding layer, this section can catch fire relatively easy compared to the wall panel sections that do have a fire shielding layer. As a result, this edge portion may be vulnerable to fire.

The fire shielding layer can provide structural stiffness and strength to the wall panel. Such a structural fire shielding layer can help provide for a wall panel that can be used as a load bearing wall element and/or a wall element that is resistant to external forces such as wind or objects placed against or impacting the wall panel. Introducing structural stiffness and strength in the fire shielding layer can allow for minimizing the thickness of a potential extra layer that would otherwise provide this structural stiffness and strength. Thereby the overall thickness of the wall panel may be reduced.

The fire shielding layer can comprise magnesium oxide, resulting in a thin and stiff layer, in particular a structural fire shielding layer as set out above. In addition, magnesium oxide provides excellent fire retardant properties. Without being bound to any theory, it is assumed that this is due to the acceleration of the evolution of incombustible gas in the initial degradation stage when exposed to high thermal energy, such as fire. This way, the fire shielding layer can be relatively thin and light weight. A suitable material is e.g. MAGOXX ^{©} Board, a material based on magnesium oxide reinforced with multiple layers of glass fiber..

The fire shielding layer can comprise sheets or internal layers of glass fiber gauze. This may mitigate buckling or other loss of structural integrity when exposed the shielding layer of the wall panel is exposed to the high thermal energy of a fire, so as to help retain the integrity of the fire shielding layer and thereby of the wall panel.

The thermal insulating layer can comprise foam material, e.g. EPS. Alternatively, a fibrous material, e.g. glass wool, can be used to provide a thermal insulating layer. The thermal insulating layer may help to retain a temperature differential across the width of the wall panel. In addition, the thermal insulating layer help prevent thermal energy from quickly penetrating deep in to the wall panel, increasing the time the wall panel can be exposed to a fire before the wall panel is too damaged for use.

The wall panel can further comprise a peripheral frame. Additionally or alternatively, the peripheral frame can encase the insulating material. Outer faces of the peripheral frame can form a central portion of the side edges of the panel. The peripheral frame can include beams of wood or steel. The peripheral frame can provide extra strength and rigidity to the wall panel and can allow for easier assembly when a wall panel is mounted to an additional wall panel, a roof and / or floor component. To increase fire resistance of the panel, the fire shielding layer can extend over the side faces of the frame that face the exterior layer.

Adjacent layers of the panel can be bonded together by glue. The glue bond can be formed using conventional assembly methods, e.g. pressing layers together with glue in between layers, providing glue between the layers in a vacuum press. Preferably, the glue is a glue that maintains at least most its adhesive properties at high temperatures such that the layers do not become detached, or unbonded, from each other when exposed to fire. A suitable glue is e.g. SikaForce^{®}-7712 L80, which is a two component polyurethane glue.

The wall panel can further comprise a radiation absorbing layer, e.g. a layer comprising lead. Such a wall panel can be used to shield against radiation, for example produced by medical equipment such as a X-Ray or CT or scanner. Preferably, sufficient radiation is absorbed by the wall panel such that medical personal operating the medical equipment, do not need additional radiation protection equipment when present on the other side of the wall panel when the medical equipment is producing radiation. A single wall panel section or wall panel can be sufficient, however it can be advantageous to substantially surround the medical equipment with wall panels comprising an radiation absorbing layer.

The wall panel can further comprise an electromagnetic shielding layer, in particular radio frequency interference (RFI) and electromagnetic interference (EMI) shielding, e.g. an electrically conductive layer, in particular a layer comprising copper. When medical equipment is used that is sensitive to electromagnetic radiation, e.g. a MRI scanner, it can be preferable to shield said medical equipment against or from emitting electromagnetic radiation in order to get reliable results and to protect the surrounding environment. A single wall panel section or wall panel can be sufficient for shielding, however it can be advantageous to substantially surround the medical equipment with wall panels comprising an electromagnetic shielding layer.

In addition, the invention provides for a mobile medical accommodation unit, comprising an enclosure for accommodating persons, in particular medical staff and patients, and medical examination equipment, in particular an X-Ray, CT or MRI scanner. The walls, in particular upright walls, more in particular sidewalls, of the enclosure include one or more panels as described above.

The panels may interconnect to form a fire retarding sidewall of an enclosure that can be classified as E60, EI30 and EW60 according to the EN 13501-2:2016 ISO fire classification norm of construction products, as published in 2016. Such a classification can be indicative that the fire retarding side wall can withstand high thermal energy, e.g. due to a nearby fire, at least long enough such that persons residing in the medical accommodation unit and / or the surrounding can be evacuated or the high thermal energy can be reduced. Since the medical accommodation unit is often placed near public health facilities, e.g. hospitals and clinics, having such a fire retarding sidewall may at least give sufficient time to prevent the spreading of a fire to nearby buildings or prevents the spreading of fire to nearby buildings by itself. A reverse scenario may also happen, in which a nearby building is on fire and the fire retarding side wall can allow for sufficient time to evacuate the persons inside the medical accommodation unit.

Additionally or alternatively, the fire retarding sidewall can be a load bearing wall, e.g. supporting the roof of the enclosure, or a non-loadbearing wall. Both types of walls can be included in the enclosure, while it is also possible that additional walls provided in the enclosure form sub-enclosures within the enclosure. This way, the enclosure and sub-enclosures may form separate rooms that can be used different functions, e.g. a room where the medical equipment is placed and used and a separate room from which the medical equipment is operated. Preferably, the enclosure and / or sub-enclosures may each have fire retarding sidewalls that comprise the above described wall panels that comprise EM and / or radiation shielding.

As set out above, the mobile medical accommodation unit may e.g. be a wheeled, towable unit, e.g. trailer, or a relocatable unit, e.g. with extendable/retractable legs or liftable with a crane. The medical accommodation unit can be placed for different durations. For example, when the mobile medical accommodation unit is a towable trailer, the medical accommodation unit can be moved relatively easily from one location to another. This can be advantageous when used to provide specialized and expensive medical equipment to areas with low population densities, where it can be financially infeasible to provide a permanent medical accommodation with medical examination equipment. By moving from one location to another in a relatively sparsely populated area, a larger population can be reached, making operation of a medical examination apparatus for that population economically feasible. Alternatively, the mobile medical accommodation unit may be a relocatable unit. A relocatable unit may be a medical accommodation unit suitable for placement for longer periods such as for example weeks or months. This may be needed when a hospital or clinic that has permanent medical examination equipment, such as an MRI scanner, experiences a long planned or unplanned outage of said medical examination equipment. In order to continue to provide health care, a relocatable unit may be provided near the hospital or clinic. The relocatable unit may be deployed using a crane, that can move the unit to a preferred location from a transport unit, e.g. a flatbed trailer, and vice versa. The unit may also comprise retractable legs, that may be driven to extend tothe ground when the unit is brought to a desired location placed in situby the flatbed trailer, such that the unit is supported on the legs and not on the flatbed trailer. This may allow the flatbed trailer to move away while keeping the relocatable unit in place. Afterwards, if desired, the retractable legs can be retracted, thereby lowering the medical unit towards the ground until the legs no longer support said medical unit, and the unit is directly supported on the ground. Once the medical unit needs to be moved away, the described steps can be followed in reverse, such that the medical unit ends up on the transport unit.

The invention further provides for a method of manufacturing a wall panel of a mobile medical accommodation unit, preferably a wall panel as described above, comprising the steps of providing:
- a pair of exterior layers that define opposed planar outer surfaces of the panel to be made,
- a plurality of interior layers interposed between the exterior layers,
   wherein
- the exterior layer comprises a fire spreading material, and
- the plurality of interior layers includes a fire shielding layer comprising a fire resistant material. Preferably, the plurality of interior layers include:
   - a structural layer that lends stiffness and strength to the panel to be made and/or
   - a thermal insulating layer comprising thermally insulating material.

Still further, the invention provides for a method of increasing fire resistance of a wall panel of a mobile medical accommodation unit, preferably a wall panel as described above, wherein the wall panel is provided with an exterior layer comprising a fire spreading material to spread a fire to be resisted along the outer surface of panel, and with a number of an interior layers that includes a fire shielding layer comprising a fire resistant material to retard or stop progress of the spread fire transverse to the outer surface of the panel by the fire shielding material.

Further advantageous aspects of the invention are set out in the description and appended claims.

For the purpose of disclosure it is noted that the technical features described in the paragraphs and sentences above can be isolated from the context, and the isolated technical features from the different paragraphs and sentences can be combined. Such combinations are herewith specifically disclosed in this description.

The invention will further be elucidated on the basis of exemplary embodiments which are represented in the drawings. The exemplary embodiments are given by way of non-limitative illustration of the invention.

In the drawings:
Fig. 1 shows a cut-open side view of a mobile medical accommodation unit;
Fig. 2A shows a front view of a wall panel;
Fig. 2B shows a cross-sectional view of the wall panel of Fig. 2A along the A-A line;
Fig. 2C shows a cross-sectional view of a different embodiment of the wall panel of Fig. 2A along the A-A line.

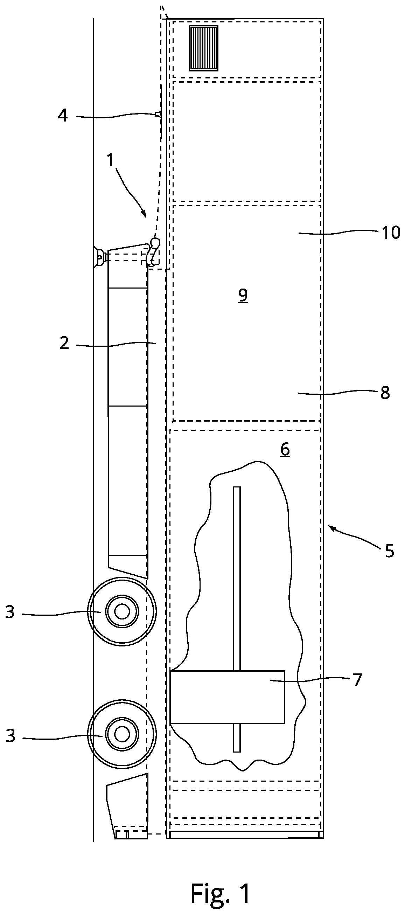

Referring to Fig. 1, a mobile medical accommodation unit 5 is depicted. The medical accommodation unit is a mobile unit provided on a trailer 1. The trailer has a chassis 2 with wheels 3 and a coupling pin 4 for coupling with a truck. The unit 5 comprises an enclosure 6 for accommodating persons and medical examination equipment 7, e.g. an X-Ray, CT or MRI scanner. The walls 8, in particular the upright walls, more in particular the side walls, of the enclosure 2 include one or more panels 10 in according with the above described invention. The panels 10 interconnect to form a fire retarding sidewall 9 of the enclosure 2 and are classified as E60, EI30 and EW60 according to the EN 13501-2:2016 ISO fire classification norm of construction products.

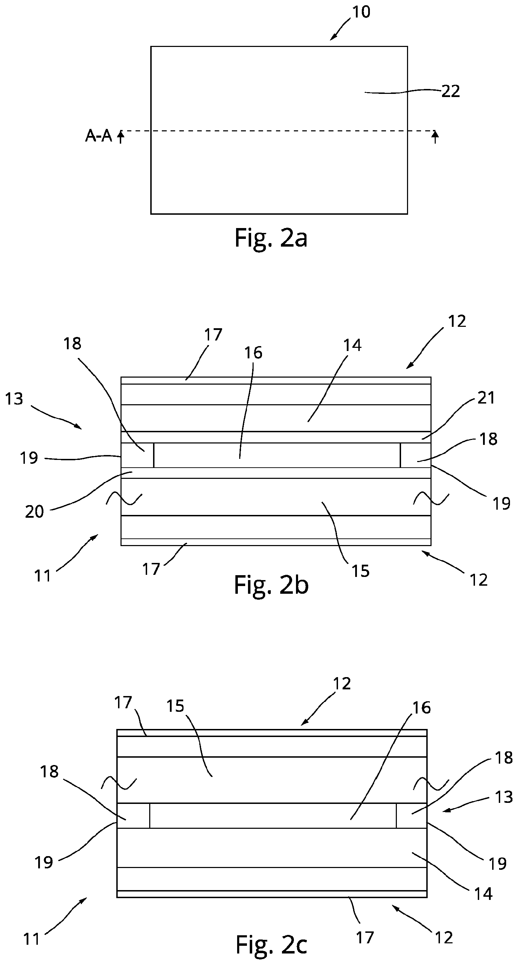

Turning to Figs. 2A and 2B, a wall panel 10 for the medical accommodation unit 5 is depicted. The wall panel 10 comprises a number of sandwiched layers 11, that are bonded together by glue. The layers include a pair of exterior layers 12, that define opposed planar outer surfaces of the panel 10, and a plurality of interior layers 13 interposed between the exterior layers 12.

The exterior layers 12 have a fire spreading material and include a sheet 17 that is made out of polyester. Furthermore, the exterior layers 12 comprise a fiber matrix and extend over the full surface area 22 of the wall panel 10.

The plurality of interior layers 13 comprises various layers with various functions, such as a radiation absorbing layer 20 that e.g. includes a lead slab and an electromagnetic shielding layer 21 that e.g. includes copper foil. Furthermore, the plurality of interior layers 13 comprises a structural layer 14 that lends stiffness and strength to the panel 10, e.g. a layer of plywood. Additionally, the plurality of interior layers 13 comprises a thermal insulating layer 15 that comprises thermally insulating material, more specifically a foam material, e.g. expanded polystyrene. The thermally insulating material may itself also be fire retardant, e.g. mineral based materials such as polyisocyanurate foam (PIR) or glass- or rock wool. A peripheral frame 18 is provided that encases the thermal insulating material 15. The outer faces 19 of the peripheral frame 18 form a central portion of the side edges of the panel 10. The peripheral frame 18 includes beams of e.g. wood or steel.

The plurality of interior layers 13 include a fire shielding layer 16 that comprises a fire resistant material and extends over the full surface area 22 of the wall panel 10 and provides for structural stiffness and strength to the wall panel 10. The fire shielding layer 16 comprises magnesium oxide, and internal layers of glass fiber gauze. In this embodiment, the fire shielding layer adds to the structural strength of the wall panel.

The exterior layer 12 comprises a fire spreading material, e.g. a plastics material. In this example, both of the exterior layers 12 include a sheet 17 that is made out of polyester and comprise a glass fiber matrix and extend over the full surface area of the wall panel 10.

Fig. 2C depicts a specific embodiment of the wall panel 10 according to the invention that was used in an experiment for the E60, EI30 and EW60 classification according to the EN 13501-2:2016 ISO fire norm. The wall panel 10 has a height of 3000mm and a width of 3000mm. The total thickness of the wall panel 10, i.e. the sum of all exterior 12 and interior layers 13 is 93.6mm. The wall panel 10 comprises a number of sandwiched layers 11, that are bonded together by glue, more specifically SikaForce^{®}-7712 L80 glue. The layers include a pair of exterior layers 12, the layers are made out of 3mm thick polyester that is coated a gelcoat and provided with with Lamilux Fireshield 630. The interior layers 13 are made out of a structural layer 14, made out of 3.6mm thick plywood sheets, a thermal insulating layer 15, made out of 80mm XPS foam and a fire shielding layer 16 that is made out of 4mm thick MAGOXX^{®} board. Alternatively, e.g. a layer of PIR can be used instead of, or in combination with a layer of XPS foam to form an 80mm thermal insulting layer 15. The peripheral frame 18, that encases the foam, is made out of timber having a thickness of 80mm and a width of 80mm.

The wall panel 10 was tested in a laboratory having an ambient temperature of 10-40 degrees Celsius at a relative humidity of 50 ± 10%. The test was carried out according to the EN 1363-1 and EN 1363-2 ISO norms. The main results from the test can be found in table 1 below, from which it can be determined that the embodiment shown in Fig. 2C indeed can be classified as E60, EI30 and EW60 classification according to the EN 13501-2:2016 ISO fire norm.

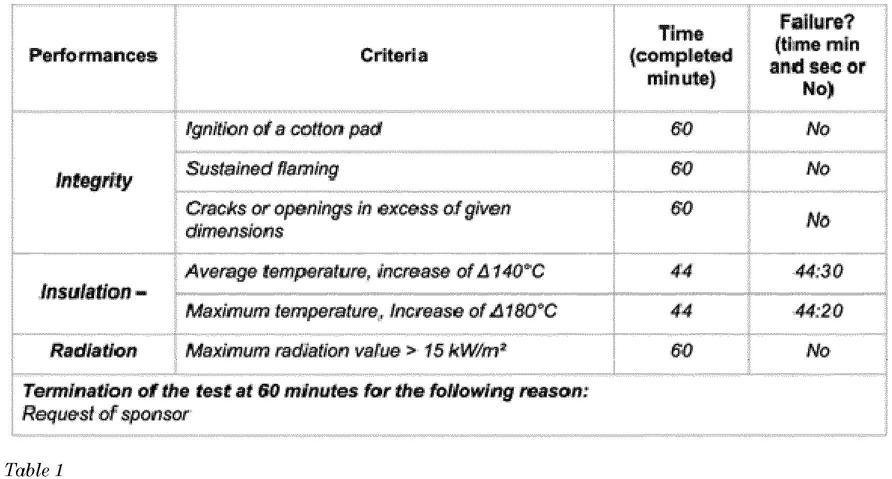

It is noted that the figures are only schematic representations that are given by way of non-limited examples. In the figures, the same or corresponding parts are designated with the same reference numerals.

Many variations will be apparent to the skilled person in the art. For example, the order in which the various layers are placed may vary, as well as the materials of the respective layers.

Such variations are understood to be comprised within the scope of the invention as defined in the appended claims.

## Claims

1. Wall panel for a mobile medical accommodation unit, comprising a number of sandwiched layers, the layers including:
- a pair of exterior layers that define opposed planar outer surfaces of the panel;
- a plurality of interior layers interposed between the exterior layers;
wherein the plurality of inner layers comprise:
- a structural layer that lends stiffness and strength to the panel;
- a thermal insulating layer comprising thermally insulating material;
wherein the exterior layer comprises a fire spreading material, and the plurality of interior layers includes a fire shielding layer comprising a fire resistant material.

2. Wall panel according to claim 1, wherein one or both of the exterior layers includes or is substantially made of a plastics material, in particular includes a sheet that comprises or is substantially made of a plastics material.

3. Wall panel according to claim 1 or 2, wherein the plastics material is polyester.

4. Wall panel according to any of the preceding claims, wherein one or both of the pair of exterior layers comprises a fiber matrix.

5. Wall panel according to any of the preceding claims, wherein the fire shielding layer extends over the full surface area of the wall panel.

6. Wall panel according to any of the preceding claims, wherein the fire shielding layer provides structural stiffness and strength to the wall panel.

7. Wall panel according to any of the preceding claims, wherein the fire shielding layer comprises magnesium oxide.

8. Wall panel according to any of the preceding claims, wherein the fire shielding layer comprises sheets or internal layers of glass fiber gauze.

9. Wall panel according to any of the preceding claims, wherein the exterior layers each extend over the full surface area of the panel.

10. Wall panel according to any of the preceding claims, wherein the thermal insulating layer comprises foam material.

11. Wall panel according to any of the preceding claims, further comprising a peripheral frame.

12. Wall panel according to claim 11, wherein the peripheral frame encases the insulating material, wherein the outer faces of the peripheral frame form a central portion of the side edges of the panel, wherein the peripheral frame includes beams of wood or steel.

13. Wall panel according to claim 11 or 12, wherein the fire shielding layer extends over the side faces of the frame that face the exterior layer.

14. Wall panel according to any of the preceding claims, wherein adjacent layers of the panel are bonded together by glue.

15. Wall panel according to any of the preceding claims, further comprising a radiation absorbing layer.

16. Wall panel according to any of the preceding claims, further comprising an electromagnetic shielding layer.

17. A mobile medical accommodation unit, comprising an enclosure for accommodating persons, in particular medical staff and patients, and medical examination equipment, in particular an X-Ray, CT or MRI scanner, wherein walls, in particular upright walls, more in particular sidewalls, of the enclosure include one or more panels in accordance with any of the preceding claims.

18. Medical accommodation unit according to claim 16, wherein the panels interconnect to form a fire retarding sidewall of an enclosure are classified as E60, EI30 and EW60 according to the EN 13501-2:2016 ISO fire classification norm of construction products.

19. Medical accommodation unit according to claim 16 or 17, wherein the medical accommodation unit is a mobile unit, e.g. trailer, or a relocatable unit, e.g. with extendable/retractable legs or liftable with a crane.

20. Method of manufacturing a wall panel of a mobile medical accommodation unit, preferably a wall panel according to any of the claims 1-16, comprising the steps of
providing:
- a pair of exterior layers that define opposed planar outer surfaces of the panel to be made,
- a plurality of interior layers interposed between the exterior layers,
wherein
- the exterior layer comprises a fire spreading material, and
- the plurality of interior layers includes a fire shielding layer comprising a fire resistant material. Preferably, the plurality of interior layers include:
- a structural layer that lends stiffness and strength to the panel to be made and/or
- a thermal insulating layer comprising thermally insulating material.

21. Method of increasing fire resistance of a wall panel of a mobile medical accommodation unit, preferably a wall panel according to an of the claims 1-16, wherein the wall panel is provided with an exterior layer comprising a fire spreading material to spread a fire to be resisted along the outer surface of panel, and with a number of an interior layers that includes a fire shielding layer comprising a fire resistant material to retard or stop progress of the spread fire transverse to the outer surface of the panel by the fire shielding material.
